(19) Europäisches Patentamt / European Patent Office / Office européen des brevets

(11) **EP 4 552 170 B1**

(12) **EUROPEAN PATENT SPECIFICATION**

(45) Date of publication and mention
of the grant of the patent:
**03.06.2026 Bulletin 2026/23**

(21) Application number: **23757509.7**

(22) Date of filing: **04.07.2023**

(51) International Patent Classification (IPC):
*H01M 4/58* (2010.01)     *H01M 10/052* (2010.01)
*H01M 50/44* (2021.01)    *H01M 50/443* (2021.01)
*H01M 50/437* (2021.01)   *H01M 50/446* (2021.01)
*H01M 50/491* (2021.01)   *H01M 4/02* (2006.01)

(52) Cooperative Patent Classification (CPC):
**H01M 10/052; H01M 4/5815; H01M 50/437;
H01M 50/44; H01M 50/443; H01M 50/446;
H01M 50/491;** H01M 2004/021; Y02E 60/10

(86) International application number:
**PCT/CZ2023/050040**

(87) International publication number:
**WO 2024/008222 (11.01.2024 Gazette 2024/02)**

(54) **COMPOSITE INORGANIC SEPARATOR FOR LITHIUM BATTERIES HAVING THREE-DIMENSIONAL ELECTRODES**

ANORGANISCHER VERBUNDSEPARATOR FÜR LITHIUMBATTERIEN MIT DREIDIMENSIONALEN ELEKTRODEN

SÉPARATEUR INORGANIQUE COMPOSITE POUR BATTERIES AU LITHIUM COMPORTANT DES ÉLECTRODES TRIDIMENSIONNELLES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **05.07.2022 CZ 20220300**

(43) Date of publication of application:
**14.05.2025 Bulletin 2025/20**

(73) Proprietor: **HE3DA s.r.o.**
**199 00 Prague - Letnany (CZ)**

(72) Inventors:
• **PROCHAZKA, Jan**
  **27301 Kamenne Zehrovice 23 (CZ)**
• **TREJBAL, Eduard**
  **14100 Praha 4 (CZ)**

(74) Representative: **Harber IP s.r.o.**
**Dukelskych hrdinu 567/52**
**17000 Praha 7 (CZ)**

(56) References cited:
**JP-A- 2014 127 440     US-A1- 2015 340 679**
**US-A1- 2020 259 150**

**Description**

Field of Art

The invention relates to an inorganic composite separator with adjustable pore size for rechargeable, especially high-rate lithium battery cells with spatially arranged three-dimensional (3D) electrodes.

Background Art

Majority of rechargeable lithium battery cells produced today are based on very thin sheet electrodes, which are prepared from a mixture of active material, conductive carbon and an organic binder, which are laminated in a thin layer to a foil of conductive material, usually aluminum or copper (current collector). The thickness of these planar electrodes is usually around 50 micrometers (rarely over 100 micrometers). The positive and negative electrodes are stacked on top of each other, separated by a thin intermediate layer of porous, electrically non-conductive material - a separator, which is usually a perforated foil made of an organic polymer and/or a combination of polymers with inorganic oxides. The stacked electrodes, separated by separators, are subsequently compressed, enclosed, and the space is filled with an electrolyte. Non-aqueous solution of lithium salts is used as the electrolyte.

In the process of charging and discharging of these planar electrodes, it is of the utmost importance to prevent the formation of lithium metal dendrites, which are formed, for example, when charging or discharging too quickly. Lithium metal is deposited on the electrodes in the form of dendrites that grow through the separator and can cause an electrical short circuit between two electrodes. The place where there is a short circuit heats up and the increased temperature causes the organic polymer separator to shrink. This makes the short circuit sturdier and can often cause thermal runaway of the cell.

Manufacturers try to incorporate inorganic substances into the composition of the separators to reduce the shrinkage coefficient. Composite separators must be as thin as possible in order to keep the high specific capacity of the battery. The typical thickness of today's separators is below 15 micrometers, and often even below 10 micrometers, while dendrites sometimes grow to hundreds of micrometers, typically 50 micrometers. The use of metallic lithium for the negative electrode in the thin film planar arrangement, where the thickness of the separator is much smaller than the length of the lithium dendrites, is practically unthinkable for this reason.

Commonly used organic polymers shrink at temperatures above 50 °C. Therefore, in order to reduce the shrinkage of the separator, composite separators are used, containing a combination of a polymer with an inorganic material that does not shrink at elevated temperatures.

Known composite separators are made of:

1) organic polymer and inorganic filler, or
2) at least one layer of an inorganic binder that is fully or partially covered with an organic polymer, or
3) an inorganic material with varying roughness of particles, which are connected by an organic binder during preparation, with subsequent curing or firing of the organic binder.

US6432586 and EP1146576 describe a ceramic separator for 2D (planar thin-film) electrodes coated by lamination of a polymeric microporous layer. The ceramic layer consists of 20 to 95% of non-conductive particles based on $Al_2O_3$ or $SiO_2$, $CaCO_3$ or $TiO_2$ with a particle size of 0.001 to 25 micrometers distributed in a conductive polymer matrix, which can be an electrolyte. This thin ceramic layer, 0.001 to 50 micrometers thick, prevents lithium dendrites from growing through. An additional polymer layer 5 to 50 micrometers thick is provided to block the ion flow between the cathode and anode in the event of thermal failure.

The choice of inorganic materials for plastic separators is very limited. The materials must be electrically non-conductive, must not intercalate lithium, must have a stable oxidation state, must resist hydrofluoric acid and chemical environment, and must have a very small particle size.

As shown in the study Quantifying the Effect of Separator Thickness on Rate Performance in Lithium-Ion Batteries (Dominik V. Horváth et al 2022 J. Electrochem. Soc. 169 030503), using thicker layers of plastic separators (up to 16 to 100 $\mu$m) drastically reduces charge and discharge rates and capacity utilization. The authors point out that the main source of the problem is the high resistance of the electrolyte in the separator, not ion diffusion through the separator.

US2005/221192 describes a thin film ceramic separator based on $Al_2O_3$ or $Zr_2O_3$ and $SiO_2$. Its porosity is 30 to 70%. The separator contains at least two particle size fractions with a difference of at least 10 micrometers. Larger particles are $Al_2O_3$ or $Zr_2O_3$, smaller particles are $Zr_2O_3$ and $SiO_2$. A preferred thickness of the separator layer is 10 to 15 micrometers. Preferably, the separator contains a silicone binder for better cohesion and bonding to the electrode. The separator is applied to the electrode as a suspension at a higher temperature, when a very thin layer of the separator is formed on the electrode in situ.

EP1803177, US2008032197, and WO2006045339 describe inorganic separators for thin-film lithium batteries, a method of their production, and their use. The separator-electrode unit comprises an inorganic separator layer, containing at least two fractions of metal oxide particles differing from each other by the average particle size and/or by different metal oxides, and an electrode, while their active mass particles are bonded together with the working electrode by means of an inorganic adhesive. This way the separator thicknesses below 15 micrometers can be achieved. The disadvantage is that a separator containing only powdered ceramic material has the separator weight in g/m$^2$ too high, even at a relatively thin separator layer.

As an example of recent thick-layer separators, WO 2019195605 can be mentioned. It describes a composite separator for primary batteries (non-rechargeable), which contains a layer of glass fibers, a layer of polymer and possibly a binder. The thickness of the separator layer for use in Al-graphite batteries ranges from 60 to 200 micrometers. There can be several layers, where the glass fiber layers are combined with polymer layers. The glass fiber layer or the polymer layer may contain glass paper made of glass fibers, also for example $SiO_2$ fibers. It is porous with the pore size of 0.1 to 10 micrometers. Glass fiber paper (GFP) is highly porous, so its use requires a thick separator, where an excessive amount of electrolyte is required. Therefore, such strong separators containing only GFP and electrolyte are not commercially viable and are therefore combined with polymer layers. The negative electrode is Al. The application mentions that it can also be metallic Li. The positive electrode contains graphite. However, the electrochemical difference of potentials between lithium and graphite is only 0.2V, thus the practical utilitzation of Li-graphite batteries is practically minimal.

Similarly, glass fiber separators designed for lead-acid batteries are unsuitable for lithium batteries because their pore size is designed to retain mechanically exfoliated parts of the electrodes and is many times larger (around 30 micrometers) than is needed to separate the lithium electrodes and protect against lithium metal dendrite growth.

WO2019070945 describes a separator for Li-S batteries which includes a material capable of absorbing and desorbing polysulphides. The composition of the separator ensures lowering of sulfur loss from the cathode during cycling, thus improving cycle life. A lithium-sulfur battery contains a lithium metal anode and a cathode containing sulfur, with a space between them, in which a multifunctional separator is located. The separator contains an active materials capable of absorbing and desorbing polysulfides, and the electrolyte is in contact with them. The active material of the separator comprises metal nitride or metal oxynitride, wherein the metal nitride or metal oxynitride has a porosity of 20% or higher. The separator contains porous supports in the form of microporous spheres, formed by mesoporous nanoparticles, porous hollow carbon, graphene oxide layers, porous carbon nanofibers, hollow carbon fibers, metal foams, metal networks or a combination thereof, optionally the porous material contains carbon, graphene, graphene oxide, metal and combinations thereof or polymers that are coated with the active material. A nitride or oxynitride compound can also serve as a separator core, and the core is coated with a coating containing a metal nitride or oxynitride, which composition differs from the core.

Problems and formation of dendrites in thick-layer (3D) electrodes is addressed by WO2010031363. At least one electrode contains an active material with a morphology of hollow spheres, the wall thickness of which is at most 10 micrometers, and/or with a morphology of aggregates and/or agglomerates of 30 micrometers in size, the active material being capable of absorbing and releasing lithium in the presence of an electrolyte. This material allows to create a thick electrode by pressing without organic binders with a minimum thickness of 0.5 mm and a high content of active materials and with a porosity of the pressed electrode of 25 to 90%. The three-dimensional electrode allows to create a thick separator with a thickness of 0.1 to 10 mm, containing a highly porous electrically non-conductive ceramic material with open pores and the porosity of 30 to 95%. The separator consists of pressed, porous ceramic powder based on $Al_2O_3$ or $ZrO_2$ and/or powder of pyrolyzed products and/or pressed powder of non-woven glass and/or ceramic fibers. The separator has a non-directional morphology of pyrolyzed products or non-woven glass or ceramic fibers. The advantage of this separator is its thickness preventing the dendrites from growing through. However, a big disadvantage is that dry powders have to be mechanically pressed into the final shape during the production process, which in the case of larger areas presents a problem with mechanical damage to the electrodes and the homogeneity of the compressed layer. These powder separators consist of particles that do not have a self-supporting character and must be created in situ by compression. Here, the final porosity of the separator can only be regulated by the final compression. The particle weight is also quite high, especially when using $ZrO_2$, which has a specific weight of 5.68 g/cm$^3$.

EP2727171 describes Li batteries with three-dimensional electrodes described in EP 2371019, US 10581083, wherein a separator containing compressed inorganic ceramic material based on $Al_2O_3$, $SiO_2$, $ZrO_2$, glass in the form of nanofibers, fibers or organic porous foils is used. Also in this case, the inorganic separator has the same problem associated with lack of adjustability of pore size, structureability of the separator and problems with its handling. US 2020/259150 A1 describes an example of a bare glass-fibre separator being formed by interwoven glass fibres.

It is evident from the cited documents that the known rechargeable lithium battery cells are mostly produced on the basis of thin film planar electrodes. The thickness of these planar electrodes is usually around 50 micrometers (rarely over 100 micrometers). Instead of the polymer separators, composite separators containing various polymers or their mixtures with ceramic materials, or combinations of layers of ceramic materials and polymer layers, are used or applied to electrodes. The preparation of these separators is quite complex and often requires the use of various binders and subsequent heat treatment to remove them.

The disadvantage of batteries that use a separator containing only inorganic material powders is their high weight.

The disadvantage of using glass paper for lithium batteries is their large thickness and large pores.

Nowadays, the thicknesses of the electrodes and separators are precisely calculated and propotionalized, as well as the transportation of lithium ions and the formation of metallic lithium dendrites (= lithium metal dendrites) is optimized by engineers. Any change in the ratios of their thicknesses or other parameters, such as capacity, would mean a deterioration of the battery safety, reliability and performance. Lithium dendrites are formed mostly during cell charging and grow to sizes over 50 micrometers. Their formation is strongly dependent on the homogeneity of the separator. They typically form in the weakest parts of the separator. The thinner the separator is, the more difficult it is to ensure its homogeneity. Temperature also has a fundamental influence on the dendrite formation, wherein extreme demands are placed on the quality of separators at the temperatures below freezing point, below which it is necessary to radically reduce the charging rates, especially when graphite is used as the anode.

Thicker electrodes, higher capacity and lithium content put more demands on the separator.

The state of the art shows that the typical disadvantages of known separators for lithium accumulators with thick-layer electrodes include the laborious production of layered composites, the use of inorganic particles in combination with organic polymers and binders, high weight in relation to their layer thickness, the disadvantage of large pores when using glass paper as a separator or as part of composite separators in combination with organic polymers, or the pressing and handling problem of pure powder ceramic separators.

Disclosure of the Invention

The above listed disadvantages of separators for lithium batteries with three-dimensional (thick-layer) electrodes with a thickness of at least 0.1 mm, such as the laborious production of layered composites, the use of inorganic particles in combination with organic polymers and binders, high weight in relation to their layer thickness, the disadvantage of large pores when using glass paper as a separator or as part of composite separators in combination with organic polymers, or the problem of pressing and handling of ceramic powder separators, is solved by a composite inorganic separator for lithium batteries with three-dimensional (thick-layer) electrodes.

The separator for lithium batteries according to the invention is formed by interwoven non-conductive inorganic fibers, optionally with an admixture of non-conductive inorganic particles; wherein the length of the fibers ranges from 0.5 to 5 mm, and the thickness of the fibers ranges from 20 to 1500 nm; wherein the fiber material is glass. The pore size of the separator is within the range of 0.02 to 2.5 micrometers, preferably within the range of 0.02 to 1 micrometer, wherein the pore size of the separator is defined as the average pore size of the separator determined by averaging of at least 50 pore diameter values measured from an electron microscopy image. The absorption capacity (absorbency) of the separator expressed as the weight of the electrolyte soaked with 1M $LiPF_6$ in EC/DMC (ethylene carbonate/dimethyl carbonate; in a volume ratio (v:v) = 1:1; specific gravity of 1.3 g/cm$^3$ at 25 °C) is 1 to 10 times the weight of the separator (i.e. 100 to 1000% absorbency), preferably 4 to 10 times the weight of the separator (i.e. 400 to 1000% absorbency). The separator according to the invention is defined in appended claim 1.

The porosity of the separator is preferably higher than 20%, preferably higher than 50% (determined by calculation as the ratio of the volume of the separator to the volume of the soaked electrolyte, which is calculated from the ratio of the weights of the separator before and after soaking with 1M $LiPF_6$ electrolyte in EC/DMC).

The porosity of the uncompressed separator is in the range of 50 to 90%. More preferably, the porosity of the uncompressed separator is higher than 80%, most preferably in the range of 75 to 90%.

The porosity of the separator after compression with a force of 100 kPa is in the range of 20 to 55%.

Preferably, at least 90 wt. % of the inorganic fibers has a thickness in the range of 20 to 500 nm.

The pore size of the separator is in the range of 0.02 to 2.5 micrometers, more preferably 0.02 to 1 micrometer (i.e. 20 to 1000 nm), even more preferably in the range of 20 to 500 nm. The pore size of the separator is in some embodiments in the range of 20 nm to 150 nm (especially if the separator contains inorganic particles).

Glass is a material based on silicon dioxide, and it may also contain a mixture of at least one oxide of elements of IA, IIA or IIIA group of the periodic table. Preferably, glass is selected from the group A, C, D, E, R based on alumino-borosilicates, or aluminosilicates with an admixture of alkaline oxides such as CaO, MgO or $B_2O_3$. The glass can be, for example, silicate glass, potassium-calcium glass, sodium-calcium glass, borosilicate glass.

In the case of presence of non-conductive inorganic particles, the mass (weight) fraction of particles to the total weight of the separator is up to 20 wt. %.

Non-conductive inorganic particles can be particles with the largest size from 10 to 700 nm, preferably up to 500 nm, more preferably with the largest size in the range from 200 to 300 nm. Such particles may be formed by non-conductive metal oxides. In a preferred embodiment, these metal oxides can be, for example, silicon dioxide, aluminum oxide or titanium dioxide.

Non-conductive inorganic particles can also be glass fibers with a length of up to 20 micrometers, preferably up to 10 micrometers, and a thickness in the range of 20 to 1500 nm.

The fibers form a macroporous matrix, where the non-conductive inorganic particles are mechanically attached to the fibers and in the structure of the macroporous matrix without using of any binders. If the inorganic particles completely fill the pore(s) of the matrix, they form a crust with a pore size smaller than the size of the inorganic particles. In this way, the pore size of the separator can be adjusted and optimized.

The separator is free of organic binders. It also does not contain any inorganic binders. Inorganic binders are powdery substances that, after contact with liquid (water), can be used to bind fibers.

The separator according to the invention is made exclusively of inorganic matter, creating up to three types of porosities, which make the final porosity of the separator. The three types of porosity are - porosity of the matrix, porosity of partially reinforced matrix fibers and porosity of completely filled up matrix.

Inorganic materials forming inorganic particles according to the invention are ceramic materials selected from the group consisting of oxides of silicon, aluminum, zirconium, or titanium, silicates, titanates, aluminosilicates, zirconium silicates, basalt, and/or their mixtures, and/or glasses selected from group A,C,D E, R based on alumino-borosilicates or aluminosilicates with admixture of alkaline oxides such as CaO, MgO or $B_2O_3$.

The thickness of the separator after compression with a force of 100 kPa preferably ranges from 0.050 to 2 mm.

The separator layer preferably has a area density that ranges from 10 to 200 $g/m^2$.

In a preferred embodiment, the separator having a area density of 10 to 200 $g/m^2$ has a porosity in the range of 20 to 95%, more preferably at least 50% without compression, even more preferably 75 to 90% without compression; and a pore size of 50 to 1500 nm, preferably less than 500 nm, most preferably up to 150 nm.

In a separator for use in Li-S battery cells, the separator matrix can be further filled with polysulfide-migration-preventing particles, e.g. titanium dioxide, titanium nitride, graphene, zirconium dioxide.

The separator according to the present invention is prepared by a process where glass fibers are first dispersed in water, the acidity of the mixture is adjusted to a pH value in the range of 2 to 5, preferably 2.5 to 4, and then the mixture is poured through a sieve, the resulting layer is dried at a temperature of 100 to 200 °C, resulting in the formation of a macroporous matrix. If the separator is to also contain inorganic particles, these particles are introduced in the form of a suspension or dispersion in water onto the macroporous matrix. Subsequently, the macroporous matrix without or with the inorganic particles is fired at a temperature in the range of 300 to 800 °C.

Another aspect of the invention is a lithium battery containing at least one pair of electrodes separated by a separator according to the present invention, wherein the thickness of the (compressed) separator is chosen so that its ratio to the thickness of the electrode is 1:2 to 1: 10. The electrode preferably has a thickness of 100 micrometers to 4 mm, more preferably 0.3 to 2 mm, most preferably 0.5 to 1 mm.

Lithium battery electrode materials are known to those skilled in the art.

The advantage of the separator according to the invention is its easy manufacture. The aqueous suspension of inorganic nanofibers is poured through a sieve and dried. A mesoporous matrix with a pore size typically of 20 to 2500 nm is obtained. This matrix is usable as a separator for low-power batteries or can be modified into a form suitable for high-power batteries by pouring an aqueous suspension of non-conductive inorganic particles through it, drying/firing again and cutting into separators.

The matrix is thus supplemented with inert, electrically non-conductive particles of inorganic materials with a size of 10 to 700 nanometers adhering to the fibers and/or in the mesoporous structure of the matrix by van der Waals forces, without the use of any binders. In the areas where the pores complete fill the matrix, particles of inorganic materials form a crust with a pore size smaller than the corresponding size of the applied particles of inorganic materials. These inorganic materials can preferably be ceramic materials, glass, basalt and insoluble metal oxides. The structured modification of the matrix ensures low specific resistance and high mobility of lithium ions when passing through the separator, even at thicknesses of several millimeters. Furthermore, it prevents the growth of lithium metal dendrites, increases the safety and reliability of the separator, and allows increasing of the charging and discharging rates of the accumulator.

Due to van der Waals forces and the absence of chemical binders, the obtained separator has high strength, flexibility and chemical resistance.

In this way, layers with different densities and pore sizes can be created in the separator. Porosity with up to 70% smaller pores than in the original fiber matrix can be created in the interstices of the matrix fibers. In the area, where of the pores of the matrix are complete filled up by the particles of inorganic materials, especially at the surface of the matrix, the particles create a crust with a defined pore size that is smaller than the corresponding size of the applied particles of inorganic materials. Inside the matrix, depending on the properties of the applied particles of inorganic materials, these particles stick to the fibers of the matrix to a greater or lesser extent, forming a mesoporous layer with controlled pore size and density.

Modifications of the matrix increase reliability of the separator in the terms of electrical separation of electrodes, ionic conductivity and prevention of dendrite growth through the separator.

The separator easily withstands high temperatures even in the range of 500°C to 1000°C depending on the inorganic materials used, it has a high pressure drop, excellent ionic conductivity, zero electrical conductivity and consequently excellent separation properties.

Due to the wettable surface of inorganic materials and perfectly open pores, the separator has a high mobility of lithium ions in the structure of the separator, which enables safe charging of the accumulator even at high rates.

The separator according to the invention has an excellent resistance against the growth of metallic lithium dendrites (=lithium metal dendrites) even at a higher battery charging rate. The thickness of 50 to 1000 micrometers, small pore size and very good homogeneity are associated with the higher battery safety.

The separator also can be used in Li-S battery cells working as an ionic membrane preventing the migration of polysulfides that are formed on the cathode and destroying lithium if their molecules come into contact with lithium metal. In this case, the matrix additionally contains particles preventing the migration of polysulfides, selected from the group consisting of metal nitride or metal oxynitride, graphene and/or graphene oxide, together with electrically non-conductive particles of glass or ceramic materials with a size of 10 to 700 nanometers adhering to the nanofibers and inside the mesoporous structure.

The separator is chemically resistant to non-aqueous electrolytes containing fluorine.

The thickness of the separator is preferably in the range from 50 to 1000 micrometers with a porosity of 20 to 95% and a pore size of 20 nm to 2500 nm, preferably 70 to 150 nm. The area density of the separator is preferably in the range of 20 to 500 $g/m^2$ (weight per unit of area).

The pressure loss of the separator is at least 300 $Pa/100g/m^2$ and preferably over 1000 $Pa/100g/m^2$.

Another advantage is the high absorbency and strength of the separator with a high specific strength of 0.3 to 2.0 km and up to 70% compressibility without any damage.

Brief description of Drawings

Fig. 1 is an SEM image of the upper side of the separator of Example 1, with a size scale bar.

Fig. 2 shows the voltage curve of the cell of Example 1, with 8 hours of charge and 8 hours of discharge.

Fig. 3 shows an electron microscopy image showing the structure of the glass-$Al_2O_3$ composite inorganic separator of Example 2 (wrapped around fibers and partially filled pores).

Fig. 4 is an electron microscopy image showing the structure of the glass-$Al_2O_3$ composite inorganic separator of Example 3 (wrapped around fibers, filled pores, and formed dense homogeneous $Al_2O_3$ crust on the matrix surface).

Fig. 5 shows the voltage curve of the cell of Example 3, at 1.5 hour rate of charging and 1.5 hour rate of discharging.

Fig. 6 is an electron microscopy cross-section image of a glass-$TiO_2$ composite separator of Example 4.

Fig. 7 shows a cross-section of a separator with the thickness of 446 nm with an oriented matrix nanofiber structure filled with $TiO_2$ nanoparticles penetrated to the depth of about 200 micrometers, creating a pore size of about 25 nm (Example 5), the image is provided by electron microscopy.

Fig. 8 is an electron microscopy image showing the separator matrix with a $TiO_2$ nano-anatase crust on the surface (Example 5).

Fig. 9 shows a graph of cycling of the cell of Example 5.

Fig. 10 shows a graph of cycling of the cell of Example 6.

Fig. 11 shows a graph of cycling of the cell of Example 7 (comparative example).

Fig. 12 shows the graph of cycling of the cell of Example 8 (comparative example).

Examples

Methods:

The composition of the separator (% by weight of fibers and % by weight of inorganic material) was determined gravimetrically by weighing the components, i.e. matrix and inorganic material, using precise laboratory balances. Particles of inorganic material are captured by the matrix with a weight deviation of less than 5% (losses).

Separator thickness: measurements without any applied pressure and at a constant pressure of 20 kPa took place on a VEB FENMESGERATEWERK FREIBERG thickness measurement instrument, with a contact area of 10 $cm^2$. Values are expressed in mm units.

Separator thickness measurement after compressing the separator with a force of 100 kPa was carried out on a LWBK thickness gauge (AB Lorentzen & Wettre), type 1-2, with a constant contact pressure of 100 kPa, a contact surface diameter of 16 mm and a contact surface size of 2 $cm^2$. Values are expressed in units of mm.

The area density was measured gravimetrically by taking a 100x100 mm sample from the separator, the sample was weighed to the nearest 0.01 g, and the resulting weight was normalized to an area of 1 $m^2$. Area density is given in $g/m^2$ units.

The absorbency (electrolyte soaking) was determined gravimetrically as the weight of the soaked-in electrolyte 1M $LiPF_6$ in EC/DMC (ethylene carbonate/dimethyl carbonate; in a volume ratio (v:v) = 1 : 1 and a specific gravity at 25 °C of 1.3 $g/cm^3$) in a separator sample of dimensions of 10 x 10 cm, related to the weight of the separator before soaking. Soaking of the electrolyte was carried out to a constant weight of the soaked separator. The weight of the soaked-in electrolyte was calculated as the difference between the weight of the separator after soaking and the weight of the dry separator (before soaking). Absorbency was measured with an uncompressed separator.

The porosity was determined by calculation from the volume (area x thickness) and the electrolyte volume calculated from the difference in the weights of the separator before and after soaking with the electrolyte.

$$Porosity\ [\%] = Separator\ volume/electrolyte\ volume$$

Porosity determination methods used:

1) Without compression - the separator 10x10 cm having a thickness determined by the thickness gauge is weighed, then soaked with an electrolyte with a given specific density of 1.3$g/cm^3$ and weighed again. In this way, the volume of the electrolyte is determined and the porosity is calculated according to the above equation, with the volume of the separator being calculated as the product of 10 x 10 cm x the thickness determined by the thickness gauge.

2) Compression of 100 kPa - forty separators 10x10 cm are weighed and stacked on top of each other between plan-parallel metal plates and compressed with a force of 100 kPa. The weight and thickness of this pack (the distance between the plates) is measured, thereby determining the volume of the separator. The compressed pack of separators is immersed in the electrolyte for 4 hours, when the electrolyte soaks into it. Subsequently, the increase in weight by soaking of the electrolyte is determined and the volume of the electrolyte is calculated by dividing by the specific density of the electrolyte. The porosity of compressed separators is further calculated according to the above-given equation.

Pore size was determined using electron microscopy by reading the sizes of at least 50 pores from the image and calculating the average of these sizes.

The pressure loss was measured on a micromanometer with an inclinable arm from Mikrotechna- Modřany, type UMK at the set conditions of the rotameter 75 (5 l/min; 0.0167 m/s). The function was checked with a so-called calibration plate with a calibrated value of 300 to 310. Values are expressed in $Pa/100g/m^2$ units.

Strength was measured on a Labor Tech breaking machine, Labtest 2.005S. Values are expressed as specific strength in km units according to ČSN IEC 60050-212.

Electrochemical measurement methods were performed on the BaSyTec Battery Test System. Methods used include potentiometry, amperometry and voltammetry.

Example 1:

Inorganic silicon dioxide ($SiO_2$) fibers typically ranging from 0.5 to 5 mm in length and 20 to 1500 nm in thickness were dispersed in water and the mixture was diluted and acidity adjusted to pH 4. The mixture was then dispensed through a sieve on which it formed a regular layer, which was dried at a temperature of 250 °C, and subsequently fired at a temperature of 700 °C to form a porous separator matrix. The matrix prepared in this way was cut to a desired shape of separators and these were used in an accumulator with 1 mm thick electrodes. The separators showed the following properties:

Separator thickness without compression - 0.3 mm
Separator thickness after compression with a force of 100 kPa - 0.15 mm
Area density - 50 $g/m^2$
The absorbency of the electrolyte was 1:6.2 based on the weight of the uncompressed separator.
Porosity 79% before compression, 40% after compression with a force of 100 kPa
Pore size statistically determined from electron microscopy < 500 nm
Separator pressure loss - 720 $Pa/100g/m^2$

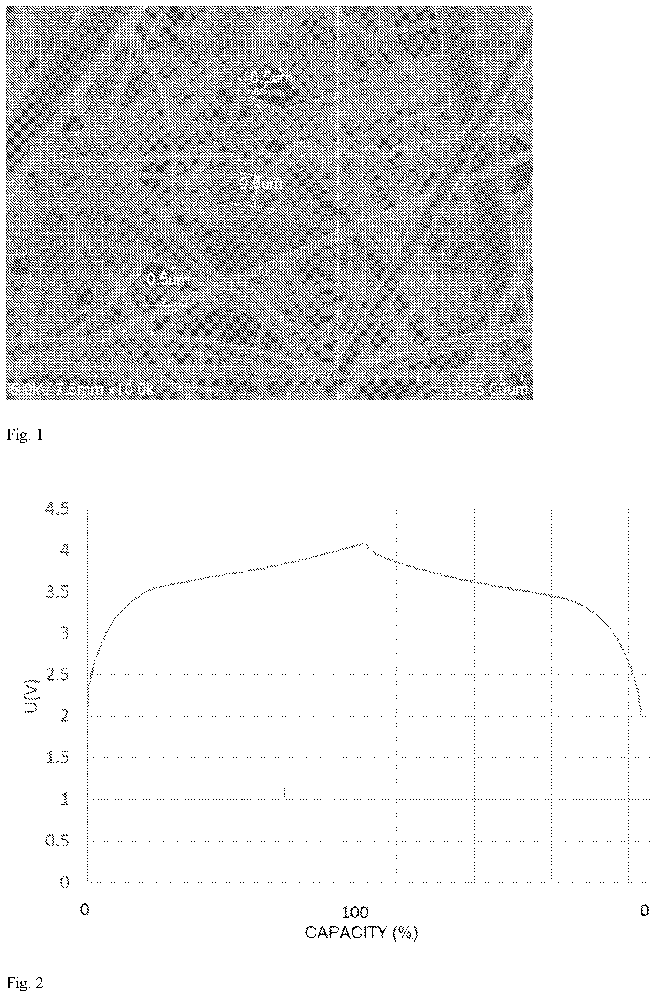

Fig. 1 shows a picture of the upper side of the separator of Example 1 taken with a field emission electron microscope (FE SEM). It can be seen from the image that the typical pore size is around 500 nm (0.5 $\mu$m).

A test cell with 1 mm electrode thickness (3D), constructed using this separator, and lithium nickel manganese cobalt oxide (NMC-$LiNi_xCo_{(1-x)/2}Mn_{(1-x)/2}O_2$) as a cathode and graphite as an anode has an excellent discharge performance (up to 1000 A peak and 50 A continuous), shows full capacity utilization (500 Wh), low specific resistance and low coloumbic losses (< 5%).

A full charge from a discharged state can be achieved at a rate of C/4 (4 hours). A typical constant-current charge-discharge voltage curve at relatively slow cycling of 8 hours of charge and 8 hours of discharge was measured by a commercial BaSyTec Battery Test System and is shown in Fig. 2.

Example 2:

Inorganic glass fibers having the length typically in the range of 0.5 to 5 mm and the thickness in the range of 20 to 1000 nm were dispersed in water, the mixture was diluted and its acidity adjusted to pH 2.5. Then this mixture was poured through a moving fine sieve, where it formed a uniform layer which was subsequently dried at 150°C to form a porous matrix. Aluminum oxide ceramic particles with an average particle size of 250 nm were introduced into the matrix by a wet method. The ceramic particles penetrated inside this matrix and covered its fibers. This composite was dried at 350 °C to form a layer of the separator matrix, from which separators of desired shapes were subsequently cut and used in a accumulator cell with three-dimensional electrodes with a thickness of 0.5 mm.
The separators showed the following properties:

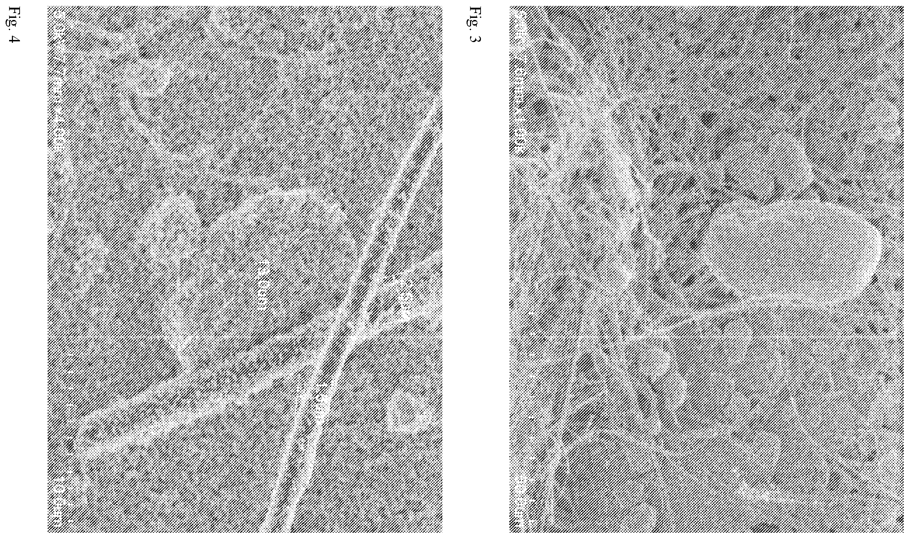

Composition: glass (90%), $Al_2O_3$ (10%)
Thickness without compression - 0.32 mm
Thickness after compression with a force of 100 kPa - 0.17 mm
Area density of the separator - 45 g/m$^2$
The absorbency of the electrolyte was 590 wt. %, based on the weight of the uncompressed separator. Porosity 64% before compression, 34% after compression with a force of 100 kPa
Pore size < 300 nm
Pressure drop - 950 Pa/100g/m$^2$
Fig. 3 shows an image of the upper side of the separator, taken with a field emission electron microscope (FE SEM).

A battery cell based on NMC/graphite chemistry with 1 mm electrode thickness (3D) constructed using this separator has excellent discharge performance (up to 1000 A), full capacity utilization (500 Wh) and low losses (< 4%).
Charging from a discharged state can be safely performed at a rate of C/3 (3 hours). When overcharging the cell with three times the recommended current, lithium separator penetration occurred at a voltage of 4.17 V.

Example 3:

Inorganic potassium-lime glass fibers, having the length typically in the range of 0.5 to 5 mm and the thickness 20 to 1500 nm, were dispersed in water and the mixture was diluted and acidity adjusted to pH 3. The mixture was then poured over a moving screen where it formed a uniform layer which was dried at 150 °C, forming a porous matrix. Aluminum oxide ceramic particles with an average particle size of 250 nm were introduced into the matrix by a wet method. The ceramic particles penetrated inside this matrix, stuck mechanically to its fibers and saturated the pores of the matrix at the same time, and formed a dense homogeneous $Al_2O_3$ crust on the surface. This way the pore size of the composite changed to 150 nm on average (Fig. 4). This composite was subsequently dried at 350 °C to form a layer from which separators were cut, and these were used in a battery cell with three-dimensional electrodes 0.5 mm thick.
The separators showed the following properties:

Composition: glass 88%, $Al_2O_3$ (12%)
Thickness without compression - 0.31 mm
Thickness after compression with a force of 100 kPa - 0.17 mm
Area density - 57 g/m$^2$
The absorbency of the electrolyte was 570 wt. %, based on the weight of the uncompressed separator.
Porosity 81% before compression, 44% after compression with a force of 100 kPa
Pore size (statistically determined from electron microscopy) ~ 150 nm
Pressure drop - 1050 Pa/100g/m$^2$

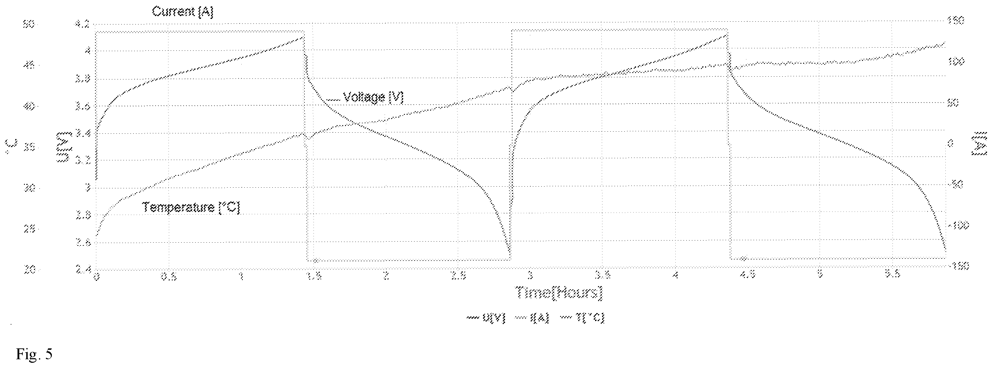

A battery cell based on NMC/graphite chemistry with the electrode thickness of 0.5 mm (3D) was constructed using this separator. It shows excellent performance (up to 1000A peak and 120A continuous), high capacity utilization and relatively low losses.
A full charge from a discharged state can be achieved at a rate of C/1.5 (1.5 hours), and even at such high rate cycling, lithium dendrites do not penetrate the separator.
The graph in Fig. 5 shows smooth voltage curves at a current load of 120A - approximately 1.5 hours of charge and discharge time.

Example 4:

Inorganic soda-lime glass fibers, having the length typically in the range of 0.5 to 5 mm and the thickness 20 to 1500 nm, were dispersed in water, the mixture was diluted and acidity adjusted to pH 3. The mixture was then poured over a moving screen where it formed a uniform layer which was dried at 150 °C, creating a porous matrix. Ceramic particles of titanium dioxide with a crystal structure of rutile with an average particle size of 250 nm were introduced into the matrix by a wet method. The ceramic particles penetrated inside this matrix. Unlike in the previous example, the titanium dioxide crystals did not stick mechanically to the fibers of the matrix, but they saturated its entire volume, thus changing the porosity of the composite to 150 nm on average. This composite was subsequently dried at 350 °C to form a layer from which separators were cut into desired shapes and used in a battery cell with three-dimensional electrodes of a thickness of 0.5 mm.

The separators showed the following properties:

Composition: glass 87%, $TiO_2$ (13%)
Thickness without compression - 0.32 mm
Thickness after compression with a force of 100 kPa - 0.18 mm
Area density 60 g/m$^2$

The absorbency of the electrolyte was 600% by weight, based on the weight of the uncompressed separator.

Porosity 79% before compression, 45% after compression with a force of 100 kPa
Pore size (statistically determined from electron microscopy) ~ 150 nm
Pressure drop - 1030 Pa/100g/m$^2$

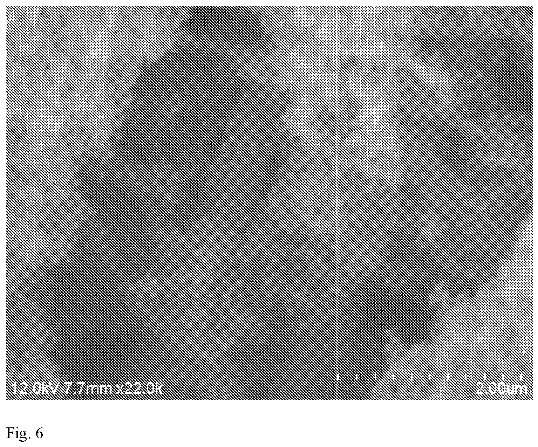

A battery cell based on NMC/graphite chemistry with an electrode thickness of 0.5 mm (3D) was constructed using this separator. It shows a stable discharge performance and low losses. The properties of this composite separator are comparable to the glass-$Al_2O_3$ composite separator of Example 2. Fig. 6 shows a cross-sectional detail of this separator.

Example 5:

Inorganic borosilicate glass fibers having the length typically in the range of 0.5 to 5 mm and the thickness of 20 to 1500 nm were dispersed in water and this mixture was continuously diluted with distilled water and the acidity adjusted to pH 2.5. Then this mixture was poured through a moving screen where it formed a uniform layer which was dried at 150°C, creating a porous matrix. Ceramic nanoparticles of titanium dioxide with an anatase crystal structure with an average particle size of 50 nm were introduced into the matrix by a wet method. The ceramic particles penetrated inside this matrix and saturated mainly the upper pores of the matrix, forming a homogeneous crust and thereby changing the pore size of the composite to an average of 50 nm. This composite was subsequently dried at 350 °C to form a layer from which separators were cut into desired shapes and used in a battery with three-dimensional electrodes with a thickness of 0.5 mm.

The separators showed the following properties:

Composition: glass 90%, $TiO_2$ (10%)
Thickness without compression - 0.44 mm
Thickness after compression with a force of 100 kPa - 0.17 mm
Area density - 55g/m$^2$

The absorbency of the electrolyte was 590 wt. %, based on the weight of the matrix before compression.

Porosity 57% before compression, 22% after compression with a force of 100 kPa
Pore size (statistically determined from electron microscopy) ~ 50 nm
Pressure drop - 1270 Pa/100g/m$^2$

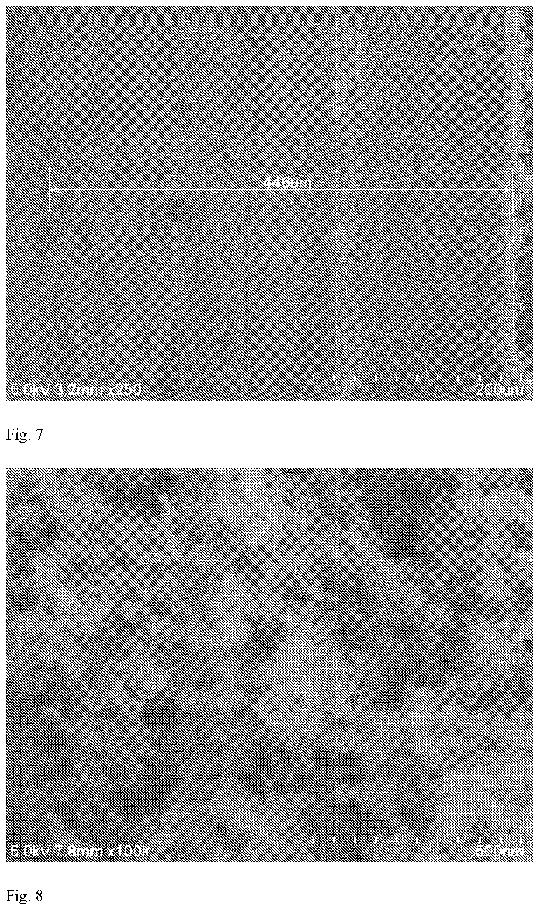

Fig. 7 shows a cross-section through a separator with a thickness of 446 nm with an oriented matrix nanofiber structure filled with $TiO_2$ nanoparticles penetrated to a depth of about 200 micrometers, forming a crust with a pore size of about 25 nm. A separator of this thickness and with such a small pore size is very difficult to produce with a traditional polymer layer. Such ability to create separators with any pore size allows to effectively modify the characteristics of fast charge separators.

Fig. 8 shows an electron microscope image of the surface of a composite separator with anatase nanoparticles with the particle and pore sizes less than 50 nm.

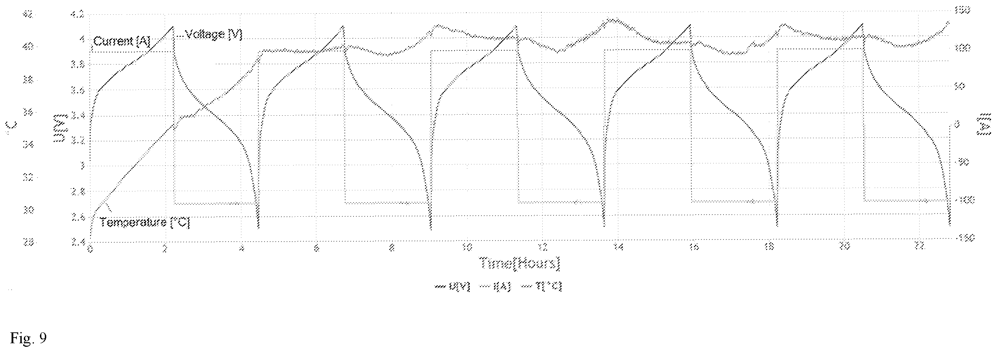

A battery with NMC/graphite chemistry and 0.5 mm electrode thickness (3D) constructed using this separator shows clean charge-discharge patterns even at relatively fast C/2 cycling rate (Fig. 9).

A full charge from a discharged state can be achieved at a rate of C/2 (2 hours), with no penetration of lithium dendrites through the separator.

Example 6:

Inorganic glass fibers having the length typically in the range of 0.5 to 5 mm and the thickness of 20 to 1000 nm were dispersed in water and the mixture was diluted and acidity adjusted to pH 2.5. Then this mixture was poured through a moving screen where it formed a uniform layer which was dried at 150°C, forming a porous matrix. Short glass fibers with a typical length of 5 to 10 $\mu$m were introduced into the matrix by a wet method. The short fibers penetrated inside the matrix and connected mechanically with the fibers of the matrix. This composite was subsequently dried at 350 °C to form a layer from which separators were cut. These separators were used in a battery with three-dimensional electrodes 0.5 mm thick.

The separators showed the following properties:

Composition: glass 100%
Area density - 55g/m$^2$
Thickness without compression - 0.33 mm
Thickness after compression with a force of 100 kPa - 0.17 mm

The absorbency of the electrolyte was 610 wt. %, based on the weight of the matrix before compression.

Porosity 76% before compression, 39% after compression with a force of 100 kPa
Pore size (statistically determined from electron microscopy) < 300 nm
Pressure drop - 1050 Pa/100g/m$^2$

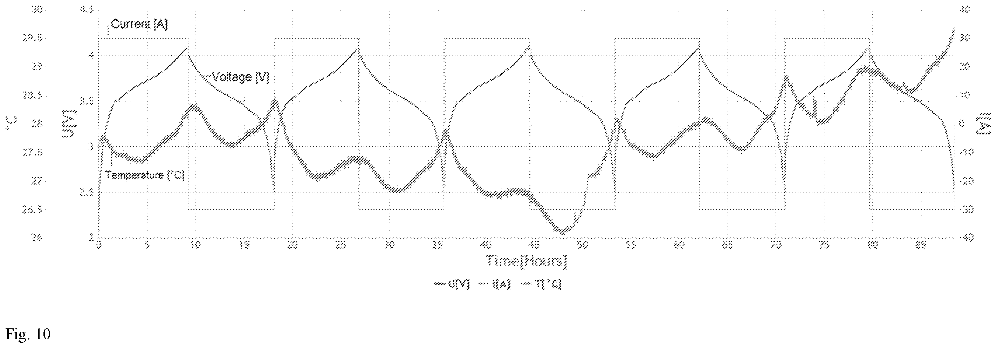

A battery cell based on NMC/graphite chemistry with 1 mm electrode thickness (3D) constructed using this separator shows stable performance, low losses, and full capacity utilization (comparable to the separator of Example 2). The stable voltage course of the cycles is evident from Fig. 10.

Example 7 (comparative):

Commercially available glass paper commonly used in high-end lead-acid batteries was used as a separator. These separators were used/tested in a battery with 0.5 mm thick NMC/Graphite three-dimensional electrodes.

The separators showed the following properties:

Composition: glass 93%, PVA 7%
Thickness without compression - 0.3 mm
Area density - 60g/m$^2$

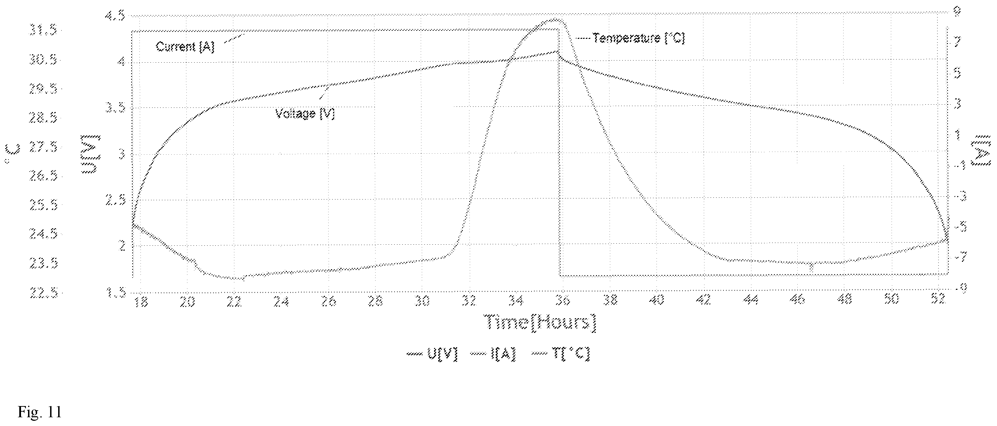

A cell based on NMC/graphite chemistry with 0.5mm electrode thickness (3D) constructed using this separator has virtually unusable properties. Even with an enormously slow charge of 36 hours, the separator fails already at 3.9 V, which is followed by overcharging, a sharp rise in cell temperature, voltage stagnation, and the risk of cell failure and explosion. The course of voltage, current and temperature is shown in Fig. 11.

Example 8 (comparative)

A commercial 23 $\mu$m plastic separator was used in an otherwise identical cell based on NMC/graphite chemistry with 0.5 mm electrode thickness (3D). From rapid degradation and significantly higher losses as compared to composite separators according to the present invention, the advantage of the inorganic separators is clear. In the inorganic separators the specific resistance does not increase during cycling, nor is there a risk of lithium dendrites growing through the separator.

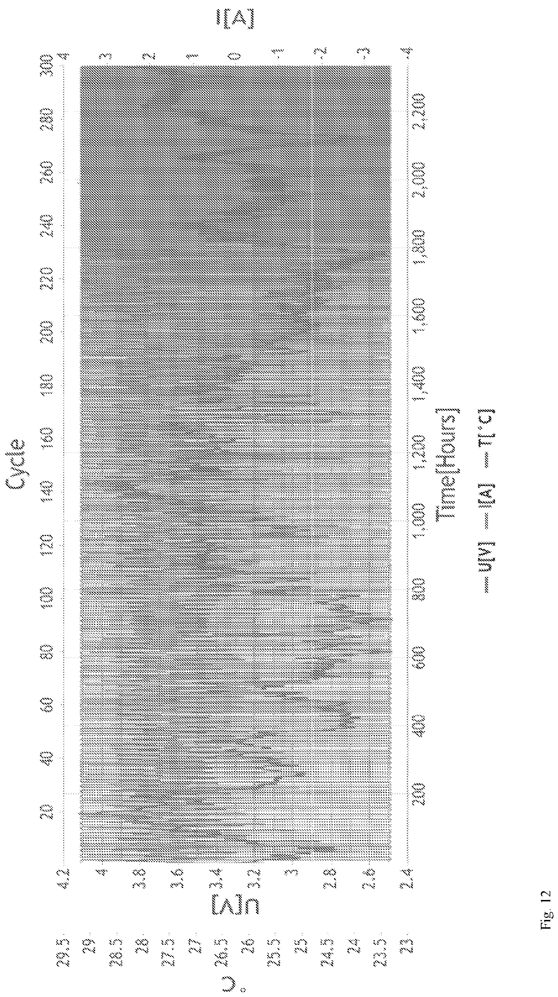

Fig. 12 shows the current, voltage and temperature curves of the first 300 cycles. A rapid decrease in capacity is evident from the shortening of cycle lengths. Losses also increase during cycling with increasing internal resistance.

Industrial applicability

The separator according to the invention can be used in the production of lithium batteries.

**Claims**

1. Separator for lithium batteries with electrodes having a thickness greater than 0.1 mm, **characterized in that** the separator is formed by interwoven electrically non-conductive inorganic fibers, optionally with an adition of non-conductive inorganic particles; wherein the length of the fibers is within the range from 0.5 to 5 mm, and the thickness of the fibers is within the range from 20 to 1500 nm; wherein the fiber material is glass; the pore size of the separator is in the range of 0.02 to 2.5 micrometers, wherein the pore size of the separator is the average pore size of the separator determined by averaging at least 50 values of pore diameters read from the electron microscopy image; the absorbency of the separator expressed as the weight of the soaked electrolyte 1M LiPF6 in ethylene carbonate/-dimethyl carbonate in the volume ratio (v:v) = 1:1 is 1 to 10 times the weight of the separator; the porosity of the separator, measured for the separator without compression, is within the range of 50 to 90%, and the porosity of the separator, measured after compressing the separator with a force of 100 kPa, is within the range of 20 to 55%; the separator layer has an area density within the range from 10 to 200 g/m$^2$ at a layer thickness of 100 micrometers, measured as defined in the description.

2. Separator according to claim 1, **characterized in that** at least 90 wt. % of the fibers have a thickness within the range of 20 to 500 nm.

3. Separator according to any one of claims 1 to 2, **characterized in that** the pore size of the separator is within the range of 20 to 1000 nm, more preferably within the range of 20 to 500 nm, even more preferably within the range of 20 nm to 150 nm.

4. Separator according to any one of claims 1 to 3, **characterized in that** it contains an admixture of non-conductive inorganic particles, wherein the weight proportion of the particles to the total weight of the separator is up to 20 wt. %, and the non-conductive inorganic particles are particles having the largest size within the range from 10 to 700 nm, preferably up to 500 nm, more preferably having the largest size from 200 to 300 nm, or glass fibers with a length of up to 20 micrometers, preferably up to 10 micrometers, and a thickness in the range of 20 to 1500 nm.

5. Separator according to claim 4, **characterized in that** the non-conductive inorganic particles are made of a ceramic material selected from the group consisting of oxides of silicon, oxides of aluminum or oxides of zirconium, oxides of titanium, silicates, titanates, aluminosilicates, zirconium silicates, basalt, and their mixtures, and/or glass selected from the group A, C, D, E, R based on alumino-borosilicates, or aluminosilicates with admixture of alkaline oxides such as CaO, MgO or B$_2$O$_3$.

6. Separator according to any one of claims 1 to 5, **characterized in that** the thickness of the separator after compression with a force of 100 kPa is within the range from 0.050 to 2 mm.

7. Separator according to any one of claims 1 to 6, **characterized in that** the matrix of the separator is further filled with particles preventing the migration of polysulfides, preferably selected from the group consisting of titanium dioxide, titanium nitride, graphene, zirconium oxide.

8. A lithium battery, **characterized in that** it contains at least one pair of electrodes separated by a separator according to any one of the preceding claims, wherein the ratio of the thickness of the separator layer to the thickness of the electrodes is within the range of 1:2 to 1:10, and the electrodes preferably have a thickness of 100 micrometers to 4 mm, more preferably 0.3 to 2 mm, most preferably 0.5 to 1 mm.

**Patentansprüche**

1. Separator für Lithiumbatterien mit Elektroden einer Dicke von mehr als 0,1 mm, **dadurch gekennzeichnet, dass** der Separator aus verflochtenen, elektrisch nichtleitenden anorganischen Fasern, gegebenenfalls mit einem Zusatz von nichtleitenden anorganischen Partikeln, besteht; wobei die Faserlänge im Bereich von 0,5 bis 5 mm und die Faserdicke im Bereich von 20 bis 1500 nm liegt; wobei das Fasermaterial Glas ist; die Porengröße des Separators im Bereich von 0,02 bis 2,5 Mikrometern liegt, wobei die Porengröße die mittlere Porengröße ist, die durch Mittelung von mindestens 50 aus dem Elektronenmikroskopbild abgelesenen Porendurchmessern bestimmt wird; die Absorptionsfähigkeit des Separators, ausgedrückt als Gewicht des getränkten Elektrolyten 1 M LiPF6 in Ethylencarbonat/Dimethylcarbonat im Volumenverhältnis (v:v) = 1:1, beträgt das 1- bis 10-fache des Gewichts des Separators; die Porosität des Separators, gemessen im unkomprimierten Zustand, liegt im Bereich von 50 bis 90 %, und die Porosität des Separators, gemessen nach Kompression des Separators mit einer Kraft von 100 kPa liegt im Bereich von 20 bis 55 %; die Flächenmasse der Separatorschicht liegt bei einer Schichtdicke von 100 $\mu$m, gemessen wie in der Beschreibung definiert, im Bereich von 10 bis 200 g/m$^2$.

2. Separator nach Anspruch **1, dadurch gekennzeichnet, dass** mindestens 90 Gew.-% der Fasern eine Dicke im Bereich von 20 bis 500 nm aufweisen.

3. Separator nach einem der Ansprüche 1 oder 2, **dadurch gekennzeichnet, dass** die Porengröße des Separators im Bereich von 20 bis 1000 nm, vorzugsweise im Bereich von 20 bis 500 nm und besonders bevorzugt im Bereich von 20 bis 150 nm liegt.

4. Separator nach einem der Ansprüche 1 bis 3, **dadurch gekennzeichnet, dass** er ein Gemisch aus nichtleitenden anorganischen Partikeln enthält, wobei der Gewichtsanteil der Partikel am Gesamtgewicht des Separators bis zu 20 Gew.-% beträgt und die nichtleitenden anorganischen Partikel Partikel mit einer maximalen Größe im Bereich von 10 bis 700 nm, vorzugsweise bis zu 500 nm, besonders bevorzugt mit einer maximalen Größe von 200 bis 300 nm, oder Glasfasern mit einer Länge von bis zu 20 Mikrometern, vorzugsweise bis zu 10 Mikrometern, und einer Dicke im Bereich von 20 bis 1500 nm, sind.

5. Separator nach Anspruch 4, **dadurch gekennzeichnet, dass** die nichtleitenden anorganischen Partikel aus einem keramischen Werkstoff bestehen, ausgewählt aus der Gruppe bestehend aus Siliciumoxiden, Aluminiumoxiden oder Zirkoniumoxiden, Titanoxiden, Silikaten, Titanaten, Aluminosilikaten, Zirkonsilikaten, Basalt und deren Mischungen, und/oder Glas, ausgewählt aus der Gruppe A, C, **D,** E, R auf Basis von Alumino-Borosilikaten, oder Aluminosilikaten mit Beimischungen von Alkalioxiden wie CaO, MgO oder B$_2$O$_3$.

6. Separator nach einem der Ansprüche 1 bis 5, **dadurch gekennzeichnet, dass** die Dicke des Separators nach Kompression mit einer Kraft von 100 kPa im Bereich von 0,050 bis 2 mm liegt.

7. Separator nach einem der Ansprüche 1 bis 6, **dadurch gekennzeichnet, dass** die Matrix des Separators zusätzlich mit Partikeln gefüllt ist, die die Migration von Polysulfiden verhindern, vorzugsweise ausgewählt aus der Gruppe bestehend aus Titandioxid, Titannitrid, Graphen und Zirkoniumdioxid.

8. Lithiumbatterie, **dadurch gekennzeichnet, dass** sie mindestens ein Paar von Elektroden enthält, die durch einen Separator nach einem der vorhergehenden Ansprüche getrennt sind, wobei das Verhältnis der Dicke der Separatorschicht zur Dicke der Elektroden im Bereich von 1:2 bis 1:10 liegt und die Elektroden vorzugsweise eine Dicke von 100 $\mu$m bis 4 mm, besonders bevorzugt 0,3 bis 2 mm und am meisten bevorzugt 0,5 bis 1 mm aufweisen.

**Revendications**

1. Séparateur pour batteries au lithium dont les électrodes ont une épaisseur supérieure à 0,1 mm, **caractérisé en ce que** le separateur est constitué de fibres inorganiques électriquement non conductrices entrelacées, éventuellement additionnées de particules inorganiques non conductrices ; la longueur des fibres étant comprise entre 0,5 et 5 mm et leur épaisseur entre 20 et 1 500 nm ; le matériau des fibres étant du verre ; la dimension des pores du séparateur étant comprise entre 0,02 et 2,5 $\mu$m, cette dimension des pores étant la dimension moyenne des pores déterminée à partir d'au moins 50 mesures de diamètres des pores effectuées par microscopie électronique ; l'absorption du séparateur, exprimée en poids d'électrolyte imprégné, l'électrolyte étant LiPF6 1 M dans un mélange carbonate d'éthylène/-carbonate de diméthyle, en proportions volumiques 1:1, est de 1 à 10 fois relatif au poids du séparateur ; la porosité du séparateur, mesurée sans compression, est comprise entre 50 et 90 %, et la porosité du séparateur, mesurée après compression à 100 kPa, est comprise entre 20 et 55 % ; la couche du séparateur présente une masse surfacique comprise entre 10 et 200 g/m$^2$ pour une épaisseur de 100 micromètres, mésurée comme décrit dans la description.

2. Séparateur selon la revendication 1, **caractérisé en ce qu'**au moins 90 % en poids des fibres ont une épaisseur comprise entre 20 et 500 nm.

3. Séparateur selon l'une quelconque des revendications 1 à 2, **caractérisé en ce que** la dimension des pores du séparateur est comprise entre 20 et 1000 nm, plus particulièrement entre 20 et 500 nm, et encore plus particulièrement entre 20 et 150 nm.

4. Séparateur selon l'une quelconque des revendications 1 à 3, **caractérisé en ce qu'**il contient un mélange de particules inorganiques non conductrices, la proportion pondérale des particules par rapport à la masse totale du séparateur étant inférieure ou égale à 20 % en poids ; lesdits particules inorganiques non conductrices étant des particules dont la taille maximale est comprise entre 10 et 700 nm, de préférence inférieure ou égale à 500 nm, et plus particulièrement entre 200 et 300 nm, ou des fibres de verre d'une longueur maximale de 20 micromètres, de préférence inférieure ou égale à 10 micromètres, et d'une épaisseur comprise entre 20 et 1500 nm.

5. Séparateur selon la revendication 4, **caractérisé en ce que** les particules inorganiques non conductrices sont constituées d'un matériau céramique choisi parmi les oxydes de silicium, d'aluminium ou de zirconium, les oxydes de titane, les silicates, les titanates, les aluminosilicates, les silicates de zirconium, le basalte et leurs mélanges, et/ou d'un verre choisi parmi les groupes A, C, **D,** E, R à base d'aluminoborosilicates ou d'aluminosilicates contenant un mélange d'oxydes alcalins tels que CaO, MgO ou $B_2O_3$.

6. Séparateur selon l'une quelconque des revendications 1 à 5, **caractérisé en ce que** l'épaisseur du séparateur après compression à une force de 100 kPa est comprise entre 0,050 et 2 mm.

7. Séparateur selon l'une quelconque des revendications 1 à 6, **caractérisé en ce que** la matrice du séparateur est en outre remplie de particules empêchant la migration des polysulfures, de préférence choisies parmi le dioxyde de titane, le nitrure de titane, le graphène et l'oxyde de zirconium.

8. Batterie au lithium, **caractérisée en ce qu'**elle contient au moins une paire d'électrodes séparées par un séparateur selon l'une quelconque des revendications précédentes, le rapport de l'épaisseur de la couche de séparateur à l'épaisseur des électrodes étant compris entre 1:2 et 1:10, les électrodes ayant de préférence une épaisseur de 100 micromètres à 4 mm, plus particulièrement de 0,3 à 2 mm, le plus particulièrement de 0,5 à 1 mm.

Fig. 1

Fig. 2

Fig. 3

Fig. 4

Fig. 5

Fig. 6

Fig. 7

Fig. 8

Fig. 9

Fig. 10

Fig. 11

EP 4 552 170 B1

Fig. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6432586 B
- EP 1146576 A
- US 2005221192 A
- EP 1803177 A
- US 2008032197 A
- WO 2006045339 A
- WO 2019195605 A
- WO 2019070945 A
- WO 2010031363 A
- EP 2727171 A
- EP 2371019 A
- US 10581083 B
- US 2020259150 A1

### Non-patent literature cited in the description

- **DOMINIK V. HORVÁTH et al.** *J. Electrochem. Soc.*, 2022, vol. 169, 030503